# EUROPEAN PATENT SPECIFICATION

(11) **EP 3 361 306 B1**
(45) Date of publication and mention of the grant of the patent: **27.12.2023**
(21) Application number: 18154923.9
(22) Date of filing: 02.02.2018
(51) Int. Cl.: G02C 5/12

(54) **PLATE OF A NOSEPIECE FOR EYEGLASSES**
PLATTE EINES NASENSTÜCKS FÜR BRILLEN
PLAQUE D'EMBOUT NASAL POUR LUNETTES

(30) Priority: 10.02.2017 IT 201700014642
(43) Date of publication of application: 15.08.2018
(73) Proprietor: Silcon Plastic S.r.l., 32012 Val di Zoldo (BL) (IT)
(72) Inventor: COSTANTIN, Arcangelo, 32012 VAL DI ZOLDO BL (IT); BATTISTIN, Pietro, 32012 VAL DI ZOLDO, FRAZIONE DONT BL (IT)
(74) Representative: Modiano, Micaela Nadia

(56) References cited:
- EP-A1- 2 947 504
- WO-A1-2013/186731
- CN-U- 2 076 244

## Description

The present invention relates to a plate of a nosepiece for eyeglasses according to the appended claims.

WO2013/186731A1 discloses a plate of a nosepiece for eyeglasses having an insert that is embedded in pad and is visible from outside through transparent portion of supporting surface of pad rested directly on wearer's nose. CN2076244U discloses a plate of a nosepiece for eyeglasses comprising an air cushion and a valve having a hole configured for passage of a screw in order to fix it to the eyeglasses.

EP2947504A1 discloses a plate of a nosepiece for eyeglasses comprising a nose-resting wing and an insert having a filler element, the filler element being insertable into an adapted complementarily-shaped seat of a frame of the eyeglasses.

Nowadays in the eyewear sector plates are known for eyeglasses, which are constituted by a wing made of soft plastic material, typically PVC, rubber or silicone, which covers an insert that is typically made of metal or of plastic material. The insert is provided with a shank with which it protrudes from the wing in order to be inserted with play into a complementarily-shaped, cup-like seat of the frame, where it is fixed by way of a screw.

Over the years, production of these components has been standardized with conventional dimensions, in particular in the regions for coupling the insert with the frame.

Usually, the seat and the shank of the insert are made with measurements and tolerances such that the coupling can occur with an overall play of 0.3 mm in all directions.

Furthermore, a degree of play is also allowed for between the screw and the wall of the hole on the shank. This latter play is usually 0.2 mm.

Owing to such degrees of play, the coupling between the plate and the frame is loose.

The loose coupling entails a series of drawbacks, including a sensation of poor stability of the eyeglass frame being worn and a perceived low quality.

Furthermore, the plays are so excessive that simply by shaking the eyeglass frame one can hear a metallic noise which is due to the continuous contacts between the metallic components.

Another drawback lies in the fact that the plate is not capable of maintaining the position that it is given by the nose of the user at the first use of the eyeglasses, therefore, upon removing the eyeglasses, the plate returns to the initial position, rotating about the axis of the screw.

Furthermore, in this manner, the screw cyclically tends to become unscrewed. In the play between this and the hole, threadlocker mixtures or glues cannot be used (glues in particular would impede the substitution of the plate in the event of necessity).

A further drawback is the possible unseating of the wing from the insert, owing to the fact that the wing is thinner in the rear portion of the plate.

The aim of the present invention is to provide a plate of a nosepiece for eyeglasses that is capable of improving the known art in one or more of the above mentioned aspects.

Within this aim, an object of the invention is to improve the coupling between the plate and the frame, by eliminating the drawbacks listed.

Another object of the invention is to prevent the wing from becoming unseated from the insert.

Furthermore, another object of the present invention is to overcome the drawbacks of the known art in a different manner to any existing solutions.

A still further object of the invention is to provide a plate of a nosepiece that is highly reliable, easy to implement and low cost.

This aim and these and other objects which will become better apparent hereinafter are achieved by a plate according to claim 1, optionally provided with one or more of the characteristics of the dependent claims.

Further characteristics and advantages of the invention will become better apparent from the description of a preferred, but not exclusive, embodiment of the plate according to the invention, which is illustrated by way of non-limiting example in the accompanying drawings wherein:
- Figure 1 is a perspective view of a plate according to the invention;
- Figure 2 shows an insert of a plate according to the invention;
- Figure 3 is a cross-sectional view of the plate according to the invention coupled to a nosepiece of an eyeglass frame;
- Figure 4 is another cross-sectional view of the plate according to the invention coupled to a nosepiece of an eyeglass frame.

With reference to the figures, the plate according to the invention, generally designated by the reference numeral 10, is designed for nosepieces of frames of eyeglasses.

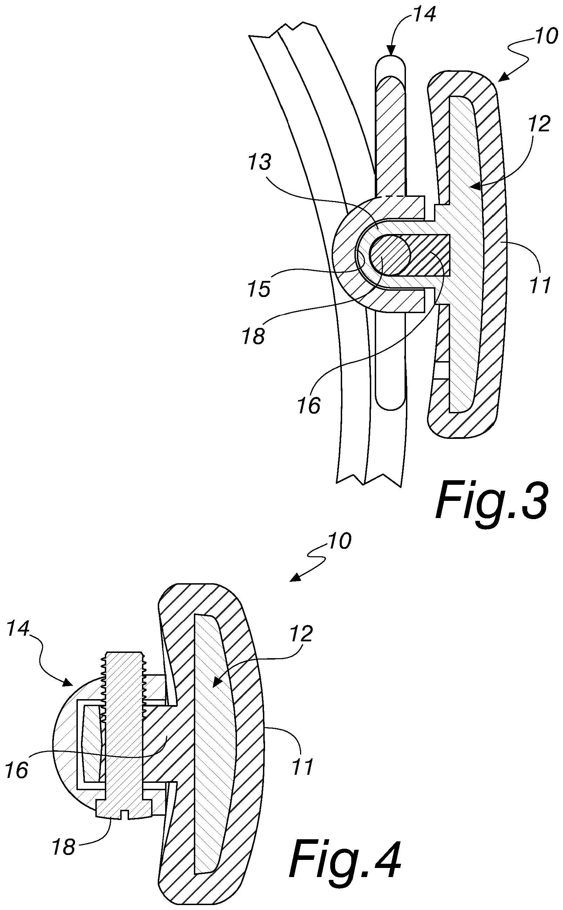

The plate 10 comprises a nose-resting wing 11, made of plastic material, and an insert 12 which protrudes from the rear of the wing 11 with a shank 13, which is designed for coupling to the frame 14 of the eyeglasses. The shank 13 in fact makes it possible to couple the plate 10 with the frame 14, since it is insertable into an adapted complementarily-shaped seat 15 of the frame 14, as in Figure 3.

The seat 15 from outside has a characteristic cup shape.

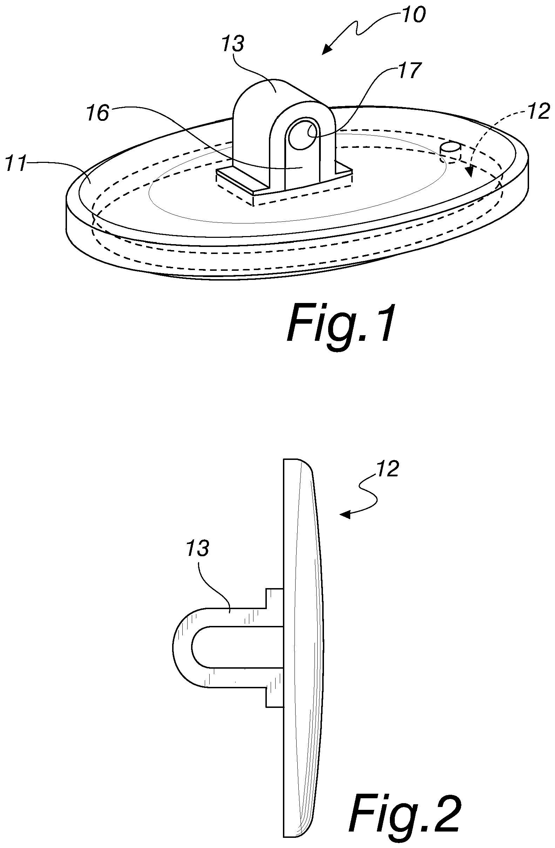

The shank 13 has a U-shaped cavity directed toward the wing 11, which contains a filler element 16 made of plastic material with a hole 17 (shown in Figure 1), substantially perpendicular to the U-shaped cavity and adapted to be passed through by a screw 18 in order to fix the shank 13 into the seat 15, as shown in Figure 3 and in Figure 4.

When the shank 13 is positioned in the seat 15 of the frame 14, the hole 17 is aligned with two through holes which are provided on the cup on opposite sides and one of which is threaded. In this manner the screw, passing through the holes in succession, fixes the shank 13, and therefore the plate 10, to the frame 14.

As can be seen in Figure 1 and in Figure 4, the filler element 16 is monolithic with the wing 11.

The wing 11 and the filler element 16 are constituted by plastic material, preferably by a material chosen from among PVC, rubber and silicone. In particular, the filler element 16 is preferably obtained by filling the cavity of the shank 13 with the same material as the wing 11, in the same step as overmolding the insert 12.

The shank 13 becomes partially embedded in the wing 11 and the hole 17 is present in the material of the filler element 16.

The hole 17 advantageously has a diameter that is at most equal to the diameter of the screw 18; in this manner the screw 18 is screwed with interference into the plastic material, as shown in Figure 4.

The plastic material has softness characteristics that are such as to allow the threading of the screw 18 to penetrate into the wall of the filler element 16 that defines the hole 17.

Use of the plate, according to the invention, is evident from the foregoing description and explanation and, in particular, it is evident that its coupling with the frame of the eyeglasses is not loose but is friction-based.

By virtue of this coupling, in order to adapt the position of the plate 10 to the nose of the user, the plate can be guided in rotation about the axis of the screw 18 and is capable of maintaining the position given.

Furthermore, the contact between metallic components, and therefore the noise that can derive from it, is eliminated.

Also, another advantage derives from the fact that the screw is screwed into a material that allows itself to be penetrated by the threading. The screw is substantially embedded in the material of the filler element, which prevents it from unscrewing even after a long period of use of the eyeglass frame.

Another advantage consists in that by providing the filler element and the wing in a single step of overmolding of the insert, the latter is completely embedded in the injected material and therefore the wing cannot be unseated from the insert.

It should also be noted that in the filler element it is possible to have a hole with a diameter larger than the traditional diameter, in which to stably position the screw in order to then proceed with the screwing, thus facilitating such operations.

In practice it has been found that the invention fully achieves the intended aim and objects, by providing a plate of a nosepiece for eyeglasses, to be mounted stably and durably to the frame.

In practice the materials employed, provided they are compatible with the specific use, and the contingent dimensions and shapes, may be any according to requirements and to the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A plate (10) of a nosepiece for eyeglasses, the plate (10) comprising:
a nose-resting wing (11); and
an insert (12) having a shank (13) protruding from the rear of said wing (11), the shank (13) being configured for coupling to a frame (14) of the eyeglasses, the shank (13) being insertable into an adapted complementarily-shaped seat (15) of the frame (14) wherein said shank (13) is provided with a U-shaped cavity directed toward said wing (11), which accommodates a filler element (16) made of plastic material with a hole (17), substantially perpendicular to the U-shaped cavity, for passage by a screw (18) in order to fix said shank (13) in said seat (15), said plate (10) being **characterized in that** the shank (13) is monolithic and completely surrounds the filler element (16).

2. The plate according to claim 1, **characterized in that** said filler element (16) is monolithic with said wing (11).

3. The plate according to claim 1, **characterized in that** said hole (17) is configurable to have a diameter that is at most equal to the diameter of said screw (18).

4. The plate according to claim 1, **characterized in that** said wing (11) and said filler element (16) are constituted by a material chosen from PVC, rubber and silicone.

5. The plate according to claim 1, **characterized in that** said shank (13) is partially embedded in said wing (11).

## Patentansprüche

1. Eine Platte (10) eines Nasenstücks für Brillen, wobei die Platte (10) Folgendes umfasst:
einen Nasenauflageflügel (11) und
einen Einsatz (12) mit einem Schaft (13), der von der Rückseite des Flügels (11) vorsteht, wobei der Schaft (13) zur Kopplung mit einem Rahmen (14) der Brille ausgebildet ist, wobei der Schaft (13) in einen geeigneten komplementär geformten Sitz (15) des Rahmens (14) einsetzbar ist, wobei der Schaft (13) mit einem U-förmigen Hohlraum versehen ist, der dem Flügel (11) zugewandt ist und ein Füllelement (16) aus Kunststoffmaterial mit einem Loch (17) enthält, im Wesentlichen senkrecht zum U-förmigen Hohlraum, zum Hindurchführen einer Schraube (18), um den Schaft (13) in dem Sitz (15) zu fixieren; wobei die Platte (10) **dadurch gekennzeichnet ist, dass** der Schaft (13) monolithisch ist und das Füllelement (16) vollständig umgibt.

2. Die Platte gemäß Anspruch 1, **dadurch gekennzeichnet, dass** das Füllelement (16) mit dem Flügel (11) monolithisch ist.

3. Die Platte gemäß Anspruch 1, **dadurch gekennzeichnet, dass** das Loch (17) ausgebildet sein kann, um einen Durchmesser zu haben, der höchstens gleich dem Durchmesser der Schraube (18) ist.

4. Die Platte gemäß Anspruch 1, **dadurch gekennzeichnet, dass** der Flügel (11) und das Füllelement (16) aus einem Material bestehen, das gewählt ist aus PVC, Gummi und Silikon.

5. Die Platte gemäß Anspruch 1, **dadurch gekennzeichnet, dass** der Schaft (13) teilweise in den Flügel (11) eingebettet ist.

## Revendications

1. Plaquette (10) d'une pièce nasale pour lunettes, la plaquette (10) comprenant ;
une ailette (11) reposant sur le nez ; et
un insert (12) comportant une tige (13) faisant saillie depuis l'arrière de ladite ailette (11), la tige (13) étant configurée pour couplage à une monture (14) des lunettes, la tige (13) pouvant être insérée dans un siège (15) de forme complémentaire adaptée de la monture (14) dans lequel ladite tige (13) est pourvue d'une cavité en forme de U dirigée vers ladite ailette (11), qui loge un élément de remplissage (16) fait de matériau plastique avec un trou (17), sensiblement perpendiculaire à la cavité en forme de U, pour le passage d'une vis (18) afin de fixer ladite tige (13) dans ledit siège (15), ladite plaquette (10) étant **caractérisée en ce que** la tige (13) est d'un seul bloc et entoure complètement l'élément de remplissage (16).

2. Plaquette selon la revendication 1, **caractérisée en ce que** ledit élément de remplissage (16) est d'un seul bloc avec ladite ailette (11).

3. Plaquette selon la revendication 1, **caractérisée en ce que** ledit trou (17) peut être configuré pour avoir un diamètre qui est au plus égal au diamètre de ladite vis (18).

4. Plaquette selon la revendication 1, **caractérisée en ce que** ladite ailette (11) et ledit élément de remplissage (16) sont constitués d'un matériau choisi parmi le PVC, le caoutchouc et le silicone.

5. Plaquette selon la revendication 1, **caractérisée en ce que** ladite tige (13) est partiellement incorporée dans ladite ailette (11).
